# FASCICULE DE BREVET EUROPEEN

(11) **EP 1 318 903 B1**
(45) Date de publication et mention de la délivrance du brevet: **29.06.2005**
(21) Numéro de dépôt: 01967464.7
(22) Date de dépôt: 10.09.2001
(51) Int. Cl.: B29C 47/10, B29C 45/18

(54) **DISPOSITIF DE PRODUCTION D'OBJETS EN PLASTIQUE SOUS ATMOSPHERE INERTE**
VORRICHTUNG ZUR HERSTELLUNG VON KUNSTSTOFFGEGENSTÄNDEN IN EINER INERTEN ATMOSPHÄRE
DEVICE FOR MANUFACTURING POLYMERIC PRODUCTS UNDER INERT ATMOSPHERE

(30) Priorité: 13.09.2000 FR 0011655
(43) Date de publication de la demande: 18.06.2003
(73) Titulaire: L'AIR LIQUIDE, Société Anonyme à Directoire et Conseil de Surveillance pour l'Etude et l'Exploitation des, 75321 Paris Cedex 07 (FR)
(72) Inventeur: NEGRO, Olivier, F-75013 Paris (FR); DICK, Sami, F-78150 le Chesnay (FR); LETURMY, Marc, F-78550 Gressey (FR); MELEN, Stéphane, F-27430 Herqueville (FR)
(74) Mandataire: Mellul-Bendelac, Sylvie
(86) Numéro de dépôt international: PCT/FR2001/002798
(87) Numéro de publication internationale: WO 2002/022342

(56) Documents cités:
- DE-U- 29 923 183
- PATENT ABSTRACTS OF JAPAN vol. 2000, no. 04, 31 août 2000 (2000-08-31) & JP 2000 015639 A (CANON INC), 18 janvier 2000 (2000-01-18)
- PATENT ABSTRACTS OF JAPAN vol. 1998, no. 11, 30 septembre 1998 (1998-09-30) & JP 10 146837 A (SUMITOMO HEAVY IND LTD), 2 juin 1998 (1998-06-02)
- PATENT ABSTRACTS OF JAPAN vol. 1999, no. 10, 31 août 1999 (1999-08-31) & JP 11 123743 A (NIIGATA ENG CO LTD), 11 mai 1999 (1999-05-11)
- PATENT ABSTRACTS OF JAPAN vol. 1999, no. 02, 26 février 1999 (1999-02-26) & JP 10 300056 A (IWATANI INTERNATL CORP), 13 novembre 1998 (1998-11-13)

## Description

L'invention concerne un dispositif de mise en forme d'objets en matière plastique sous atmosphère inerte.

L'extrusion ou l'injection du plastique est un procédé connu qui consiste à faire fondre un polymère et alimenter en continu une tête de filière ou d'injection avec le polymère fondu pour le mettre en forme. Ce procédé met en général en oeuvre :
- une trémie d'alimentation en polymère, dans laquelle le polymère est introduit sous forme de poudre ou de granulés,
- des moyens de transport, de chauffage et de malaxage du polymère provenant de la trémie, par exemple une vis sans fin chauffante,
- une tête d'extrusion constituée d'une tête de filière donnant au polymère la forme désirée ou une tête d'injection vers un moule.

II est connu qu'au cours de ce type de procédé, et notamment de l'étape de fusion dans la vis sans fin, certains polymères peuvent être sensibles à la présence de l'oxygène, ce dernier dégradant les propriétés finales du plastique mis en forme (jaunissement, réticulation du polymère, variation de la masse moléculaire). La Demanderesse a également observé que l'oxygène conduisait :
- à un encrassement du dispositif de mise en forme, ce qui rend nécessaire le nettoyage et donc l'arrêt réguliers de l'outil de production, d'où des coûts de maintenance élevés et des pertes de production, et
- à la présence de dépôts à la surface du polymère mis en forme.

Pour remédier au problème de dégradation des propriétés finales du plastique mis en forme, il est connu d'ajouter des agents anti-oxydants au polymère de départ. Toutefois, ces additifs augmentent notablement le coût de production du plastique. Une autre solution de l'art antérieur consiste à mettre le polymère en forme en présence d'un gaz inerte. Cette solution a été, par exemple, développée dans les demandes EP-A1-0 760 278, et DE 29923183 U1 dont les meilleurs résultats d'inertage n'ont pu être obtenus que par introduction du gaz inerte dans un endroit précis de la vis sans fin. Dans le cas d'une installation industrielle existante, l'introduction de gaz inerte au niveau de la vis sans fin peut se révéler compliquée, voire impossible, car il faut percer le cylindre de la vis sans que ce perçage perturbe le fonctionnement ultérieur de la vis. En outre, cette mise en oeuvre préférée n'a permis d'abaisser la teneur résiduelle d'oxygène dans l'azote qu'à une valeur de 1 % en volume.

Le but de la présente invention est de proposer un dispositif de mise en forme sous atmosphère inerte amélioré permettant notamment de modifier facilement une installation industrielle déjà existante et d'obtenir un abaissement de la teneur en oxygène plus important que celui de l'art antérieur.

Dans ce but, l'invention concerne tout d'abord un dispositif de production d'objets en plastique par mise en forme d'un polymère, ledit dispositif comprenant :
- une trémie d'alimentation en polymère,
- des moyens de chauffage et de déplacement du polymère en cours de fonte,
- des moyens de mise en forme du polymère fondu, et
- au moins un moyen d'injection de gaz dans la trémie, ledit moyen d'injection de gaz comprenant :
   - au moins une surface d'injection de gaz au niveau de la paroi de la trémie,
   - une conduite d'alimentation en gaz de la trémie par cette surface d'injection de gaz :
      . dont une extrémité est reliée à une source de gaz,
      . dont l'autre extrémité, qui est dirigée vers la surface d'injection, est fermée,
      . et qui présente au moins une ouverture φ radiale permettant une éjection du gaz perpendiculairement à son sens de circulation dans la conduite, et
   - une chambre d'homogénéisation coopérant entre la paroi de la trémie et la paroi de la conduite d'alimentation en gaz de manière à ce que le gaz sortant de l'ouverture φ pénètre dans la trémie par la surface d'injection.

Les moyens de chauffage et de déplacement du polymère en cours de fonte sont généralement constitués d'un cylindre régulé en température à l'intérieur duquel est placée au moins une vis sans fin. Ce type de vis assure également le malaxage du polymère en cours de fonte. Les moyens de mise en forme du polymère fondu sont dans le cas de l'extrusion habituellement une tête de filière présentant une forme géométrique adaptée à la mise en forme désirée : plaque, film (filière plate), profilé, tube (filière circulaire). Si le polymère fondu est mis en forme par injection, le moyen de mise en forme est alors un moule.

La trémie d'alimentation est habituellement un réceptacle présentant des sections de déchargement en forme d'entonnoir dans laquelle le polymère s'écoule par gravité. Elle peut comprendre des moyens pour réguler l'écoulement du polymère tels que des agitateurs rotatifs ou à vibrations ou une vis de forçage. Selon l'invention, la trémie présente sur au moins une de ses parois un moyen d'injection de gaz. Ce moyen d'injection de gaz comprend au niveau de la paroi de la trémie au moins une surface d'injection de gaz. Cette surface d'injection peut être constituée d'un poreux ou d'orifices d'injection, de préférence au moins un orifice φ. Cet orifice φ peut être directement percé dans la paroi de la trémie ou percé dans une plaque elle-même fixée sur la paroi de la trémie à la place d'une ouverture dans la paroi. Cette dernière mise en oeuvre peut correspondre au cas où la présente invention est appliquée à un dispositif de mise en forme déjà exploité et que l'on doit adapter ; ainsi, il est possible de remplacer un hublot de visualisation généralement présent sur la paroi de la trémie par une plaque percée d'au moins un orifice φ et fixée sur la paroi de la trémie. Le ou les orifices φ créent de préférence un flux de gaz orienté vers le bas de la trémie : l'axe du ou des orifices φ d'injection peut présenter un angle d'au moins 30° avec l'axe horizontal. Il est également préférable que le moyen d'injection de gaz soit situé en retrait du passage du polymère dans la trémie et ne pénètre pas dans le volume interne de la trémie. Ainsi, il peut être placé au ras de la paroi interne de la trémie. C'est le cas lorsque l'orifice φ d'injection de gaz est un simple trou percé dans la paroi de la trémie. Selon un mode très particulier, le ou les orifices d'injection φ peuvent être remplacés par un poreux.

Ces orifices φ font partie du moyen d'injection de gaz dans la trémie, qui comprend également une conduite d'alimentation en gaz vers ces orifices φ d'injection de gaz et une chambre d'homogénéisation coopérant entre la paroi de la trémie et la paroi de la conduite d'alimentation. La chambre d'homogénéisation peut être de toute forme possible. Son volume est de préférence fixé de manière à ce que la vitesse du gaz dans ladite chambre soit inférieure à la vitesse du gaz dans le ou les orifices φ percés dans la paroi de la trémie. Elle doit être étanche de manière à assurer le passage du gaz depuis la conduite d'alimentation en gaz vers les orifices φ d'injection de gaz. Par exemple, des joints d'élastomère peuvent être déposés sur les bords de la chambre d'homogénéisation en contact avec la paroi de la trémie et sur les bords de la chambre d'homogénéisation en contact avec la paroi de la conduite d'alimentation.

Selon le mode préféré, la section A de la chambre d'homogénéisation au contact avec la paroi de la trémie et les sections aᵢ des orifices φ d'injection de gaz percés au niveau de la paroi de la trémie vérifient la relation suivante : le rapport A/Σaᵢ est supérieur ou égal à 1, de préférence supérieur ou égal à 1,5, Σaᵢ représentant la somme des sections des orifices φ. De manière pratique, les orifices φ d'injection de gaz percés dans la paroi de la trémie présentent tous la même section a.

Le gaz est amené dans la chambre d'homogénéisation par la conduite d'alimentation en gaz qui peut présenter une section de forme variée telle que ronde, carrée ou rectangulaire. Une extrémité de la conduite est reliée à une source de gaz inerte telle que de l'azote. L'autre l'extrémité est dirigée vers le ou les orifices φ et est fermée dans sa section droite. La conduite présente au moins une ouverture φ radiale permettant une éjection du gaz perpendiculairement à son sens de circulation dans la canalisation et vers la chambre d'homogénéisation. Si plusieurs ouvertures o existent, ces dernières sont habituellement situées dans la même section droite de la conduite d'alimentation en gaz. Selon le mode préféré, la section interne S de la conduite d'alimentation en gaz et les sections sᵢ des ouvertures o vérifient la relation suivante : le rapport S/Σsᵢ est supérieur ou égal à 1, de préférence supérieur ou égal à 1,5, Σsᵢ représentant la somme des sections sᵢ des ouvertures φ. La ou les ouverture(s) φ radiales de la conduite d'alimentation en gaz peuvent toutes présenter la même section s. Selon un mode particulier, la conduite d'alimentation en gaz présente quatre ouvertures φ placées dans la même section droite de la conduite.

Les caractéristiques de l'invention permettent d'obtenir un écoulement laminaire du gaz dans la trémie et à une vitesse qui ne perturbe pas l'écoulement du polymère dans cette trémie.

Si plusieurs orifices φ existent dans la paroi de la trémie, le moyen d'injection du gaz dans la trémie selon l'invention permet d'obtenir un débit de gaz inerte identique dans chaque orifice φ.

Le moyen d'injection peut être placé à n'importe quelle hauteur de la trémie par rapport à la vis sans que les résultats en inertage en soient modifiés.

Selon le diamètre de la trémie, plusieurs moyens d'injection du type ci-dessus peuvent être placés sur la paroi de ladite trémie. Ces moyens d'injection sont alors généralement placés à la même hauteur dans la trémie par rapport à la vis et à équidistance les uns des autres.

Par mise en oeuvre du dispositif selon l'invention, le gaz inerte introduit dans la trémie est, dans un premier temps, entraîné avec le polymère dans l'extrudeuse, puis refoulé en direction de la trémie à contre-courant de l'écoulement du polymère et enfin évacué de l'extrudeuse par la trémie. Cette mise en oeuvre permet de former un tampon de gaz inerte au niveau de la trémie.

Le gaz peut être tout gaz neutre habituellement utilisé pour l'inertage des polymères. Généralement, il s'agit de l'azote et de préférence d'azote obtenu par voie cryogénique. On peut utiliser de l'azote dit impur pouvant contenir de l'oxygène et/ou de l'argon, voire du CO ou du CO₂, la teneur en azote dans le gaz étant d'au moins 95 % et la teneur en oxygène d'au plus 5 %. Ce type de gaz à base d'azote impur peut être issu d'un procédé de séparation de gaz de l'air à l'aide d'une membrane. Toutefois, ce type de gaz ne peut être utilisé que lorsque l'on cherche à obtenir une atmosphère en oxygène relativement faible, c'est-à-dire pouvant d'élever jusqu'à 5 % en volume. Eventuellement, le gaz utilisé peut être préchauffé à une température proche de la température de fusion du polymère traité avant d'être injecté. Toutefois, ce préchauffage n'influence pas la qualité de l'inertage.

Par injection d'azote obtenu par voie cryogénique, le dispositif selon l'invention permet de réaliser la mise en forme de polymères sous une atmosphère d'oxygène inférieure à 100 ppm pour une vitesse d'injection d'azote inférieure à 50 m/s, voire inférieure à 20 m/s et même inférieure à 3 m/s, selon la forme et le débit du polymère introduit. Il a également été constaté que ce dispositif a permis de réduire de façon significative l'encrassement de la vis sans fin et de la tête de filière limitant les temps d'arrêt de la machine pour nettoyage et augmentant la productivité ce qui a permis de diminuer, voire supprimer l'utilisation d'agent anti-oxydant.

Un avantage du dispositif selon l'invention est que le moyen d'injection du gaz inerte peut être placé à n'importe quelle hauteur de la trémie par rapport à la vis sans que les résultats d'inertage soient affectés. On peut donc modifier des installations industrielles existantes en s'adaptant à chaque cas particulier.

Un autre avantage est qu'un inertage très efficace est obtenu par injection du gaz inerte en un seul point du procédé et sans qu'il soit nécessaire de chauffer le gaz.

L'invention concerne également l'utilisation du dispositif précédent pour la mise en forme, notamment par extrusion, de polyéthylène haute ou basse densité ou de polypropylène, introduits sous forme de granulés ou de poudres.

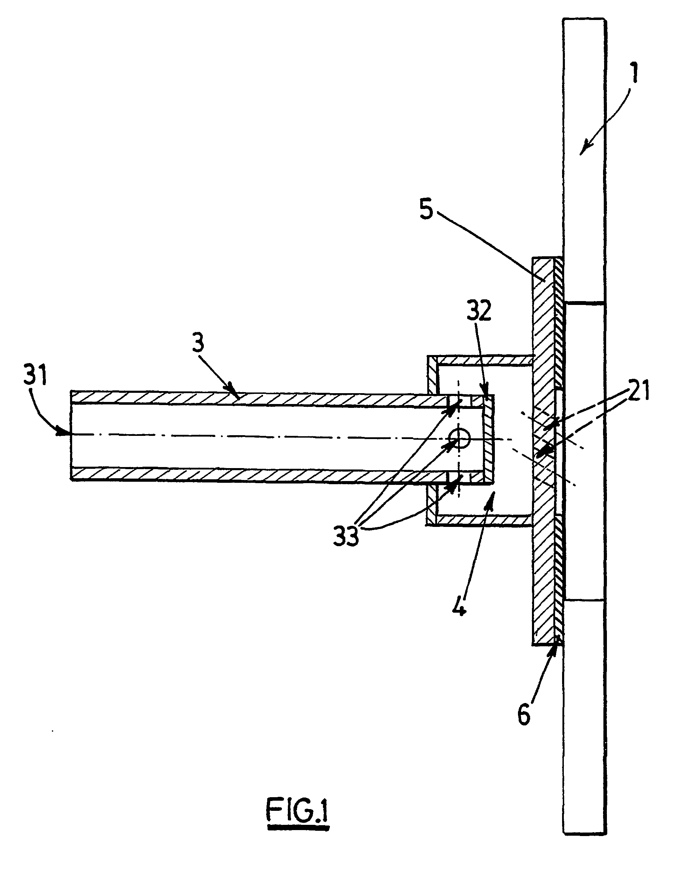

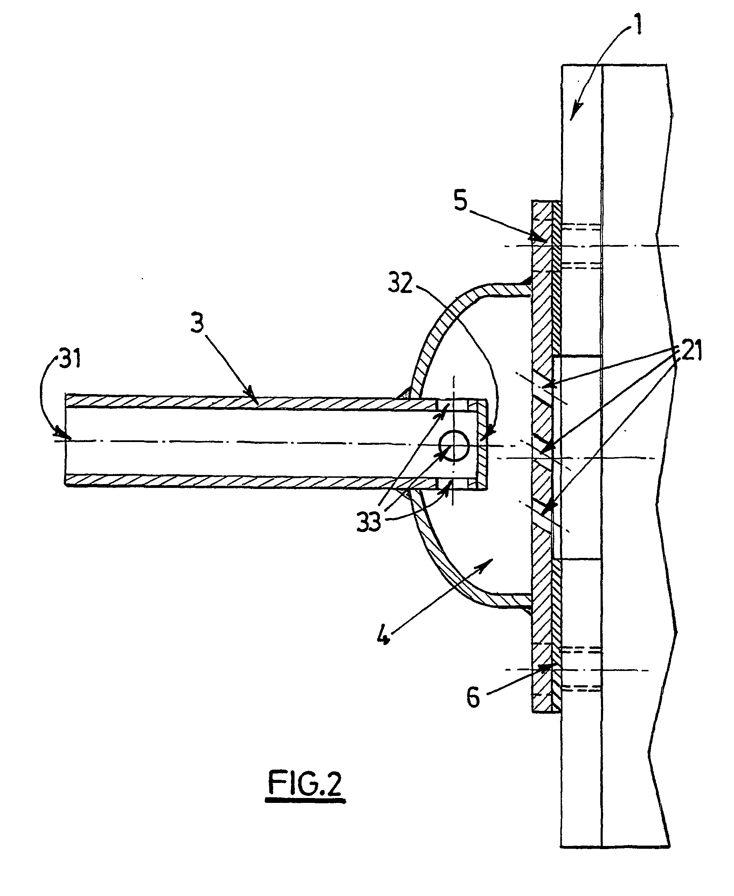

Les figures 1 et 2 illustrent schématiquement des coupes de dispositifs convenant pour la mise en oeuvre de l'invention. Les dispositifs s'adaptent sur une trémie permettant d'introduire un polymère dans le conduit d'une vis sans fin, cette vis sans fin débouchant sur une tête de filière.

Sur la figure 1, un moyen d'injection de gaz est disposé sur la paroi de la trémie (1). II comprend :
- 3 orifices circulaires d'injection de gaz φ (21), de diamètre 0,55, cm, percés dans une plaque (5) vissée sur la paroi de la trémie à la place d'un hublot de visualisation ; ces orifices φ (21) sont orientés vers le bas selon un angle de 30 ° avec l'axe horizontal.
- une conduite d'alimentation en gaz (3) vers ces orifices d'injection de gaz φ (21). II s'agit d'une canalisation de section circulaire et de diamètre 1,5 cm. Son extrémité (31) est reliée à une source de gaz. Son autre extrémité (32) est bouchée. Dans sa portion proche de l'extrémité bouchée (32), la conduite comporte quatre ouvertures circulaires φ (33) toutes du même diamètre (0,5 cm) placés dans la même section droite de la canalisation et équidistants les uns des autres. Le rapport S/Σsᵢ est de 2,25.
- une chambre d'homogénéisation (4) dont la section est de forme circulaire et dont le diamètre intérieur est de 3,6 cm. Un joint silicone (6) assure l'étanchéité de la chambre avec la paroi de la trémie. Le rapport A/Σaᵢ est de 14,3.

Sur la figure 2, la trémie comprend un moyen d'injection de gaz dans la trémie comprenant :
- 7 orifices circulaires d'injection de gaz φ (21), de diamètre 0,5 cm, percés dans une plaque vissée sur la paroi de la trémie (1) à la place d'un hublot de visualisation ; ces orifices φ (21) sont orientés vers le bas selon un angle de 30° avec l'axe horizontal.
- une conduite d'alimentation en gaz (3) vers ces orifices d'injection de gaz φ (21). Il s'agit d'une canalisation de section circulaire et de diamètre 1,5 cm. Son extrémité (31) est reliée à une source de gaz. Son autre extrémité (32) est bouchée. Dans sa portion proche de l'extrémité bouchée (32), la conduite comporte quatre ouvertures circulaires φ (33) toutes du même diamètre (0,5 cm) placés dans la même section droite de la canalisation et équidistants les uns des autres. Le rapport S/Σsᵢ est de 2,25.
- une chambre d'homogénéisation (4) dont la section est de forme circulaire et dont le diamètre intérieur est de 5 cm. Un joint silicone (6) assure l'étanchéité de la chambre avec la paroi de la trémie. Le rapport A/Σaᵢ est de 25.

### EXEMPLES

### Exemple 1

Le moyen d'injection décrit sur la figure 1 est placé sur la paroi d'une trémie à une distance de 1,50 m au-dessus de la vis sans fin. La trémie est alimentée en polyéthylène sous forme de poudre. La granulométrie de la poudre est de 2,5 mm et son débit d'alimentation de 24 kg/h.

De l'azote issu d'une unité cryogénique est introduit dans la conduite d'alimentation (3) par l'extrémité (31) avec un débit de 1,5 m³/h.

Une vanne de prélèvement est introduite entre la trémie et la vis sans fin et reliée à une sonde d'un analyseur de traces d'oxygène à cellule électrochimique. A l'aide de cette sonde, on constate que le taux d'oxygène de l'atmosphère entre la trémie et la vis sans fin est de 140 ppm.

### Exemple 2

L'exemple 1 est reproduit en plaçant le moyen d'injection à une distance de 30 cm au-dessus de la vis sans fin. Toutes les autres conditions du procédé sont conservées.

On constate que le taux d'oxygène de l'atmosphère entre la trémie et la vis sans fin est de 70 ppm.

### Exemple 3

On place deux moyens d'injection tels que décrits sur la figure 2 face à face sur la paroi d'une trémie à une distance de 30 cm au-dessus de la vis sans fin. La trémie est alimentée en polyéthylène sous forme de granulés. La granulométrie du granulé est de 2,5 mm et son débit d'alimentation de 300 kg/h.

De l'azote issu d'une unité cryogénique est introduit dans la conduite d'injection (3) par l'extrémité (31) avec un débit de 5 m³/h.

Une vanne de prélèvement est introduite entre la trémie et la vis sans fin et reliée à une sonde d'un analyseur de traces d'oxygène à cellule électrochimique. A l'aide de cette sonde, on constate que le taux d'oxygène de l'atmosphère entre la trémie et la vis sans fin est de 30 ppm.

## Revendications

1. **Dispositif de production d'objets en plastique** par mise en forme d'un polymère, ledit dispositif comprenant :
- une trémie d'alimentation en polymère (1),
- des moyens de chauffage et de déplacement du polymère en cours de fonte,
- des moyens de mise en forme du polymère fondu, et
- au moins un moyen d'injection de gaz dans la trémie,
**caractérisé en ce que** ledit moyen d'injection de gaz comprend :
• au moins une surface d'injection de gaz au niveau de la paroi de la trémie (1),
• une conduite (3) d'alimentation en gaz de la trémie par cette surface d'injection de gaz :
- conduite (3) dont une extrémité (31) est reliée à une source de gaz,
- dont l'autre extrémité (32), qui est dirigée vers la surface d'injection, est fermée,
- et qui présente au moins une ouverture (33) radiale permettant une éjection du gaz perpendiculairement à son sens de circulation dans la conduite, et
• une chambre d'homogénéisation (4) coopérant entre la paroi de la trémie et la conduite (3) d'alimentation en gaz de manière à ce que le gaz éjecté des ouvertures (33) pénètre dans la trémie par la surface d'injection.

2. Dispositif selon la revendication 1, **caractérisé en ce que** la surface d'injection de gaz au niveau de la paroi de la trémie (1) est constituée d'au moins un orifice (21).

3. Dispositif selon la revendication 2, **caractérisé en ce que** la section A de la chambre d'homogénéisation (4) au contact avec la paroi de la trémie (1) et les sections aᵢ des orifices (21) d'injection de gaz percés dans la paroi de la trémie (1) vérifient la relation suivante : le rapport A/Σaᵢ est supérieur ou égal à 1, de préférence supérieur ou égal à 1,5; Σaᵢ représentant la somme des sections desdits orifices (21).

4. Dispositif selon l'une quelconque des revendications 2 ou 3, **caractérisé en ce que** lesdits orifices d'injection de gaz (21) percés dans la paroi de la trémie (1) créent un flux de gaz orienté vers le bas de la trémie (1).

5. Dispositif selon la revendication 1, **caractérisé en ce que** la surface d'injection de gaz au niveau de la paroi de la trémie (1) est constituée d'un poreux.

6. Dispositif selon l'une quelconque des revendications précédentes, **caractérisé en ce que** le moyen d'injection de gaz est situé en retrait du passage du polymère dans la trémie (1).

7. Dispositif selon l'une quelconque des revendications précédentes, **caractérisé en ce que** la section interne S de la conduite (3) d'alimentation en gaz et les sections sᵢ desdites ouvertures vérifient la relation suivante : le rapport S/Σsᵢ est supérieur ou égal à 1, de préférence supérieur ou égal à 1,5 ; Σsᵢ représentant la somme des sections sᵢ desdites ouvertures (33).

8. **Utilisation du dispositif** selon l'une quelconque des revendications 1 à 7 pour l'extrusion de polyéthylène ou de polypropylène.

## Patentansprüche

1. Vorrichtung zur Herstellung von Kunststoffgegenständen durch Formung eines Polymers, wobei die Vorrichtung Folgendes umfasst:
- einen Trichter (1) zur Einspeisung des Polymers,
- Mittel zum Beheizen und Fördern des schmelzenden Polymers
- Mittel zum Formen des geschmolzenen Polymers, und
- mindestens ein Mittel zum Einblasen von Gas in den Trichter,
**dadurch gekennzeichnet, dass** das Mittel zum Einblasen von Gas Folgendes umfasst:
• mindestens eine Einblasfläche für das Gas an der Wand des Trichters (1),
• eine Leitung (3) zum Einspeisen von Gas in den Trichter durch diese Gaseinblasfläche:
- eine Leitung (3), deren eines Ende (31) mit einer Gasquelle verbunden ist,
- deren anderes Ende (32), das zur Einblasfläche gerichtet ist, geschlossen ist,
- und die mindestens eine radiale Öffnung (33) aufweist, die ein Ausströmen des Gases senkrecht zu seiner Strömungsrichtung in der Leitung erlaubt, und
• eine Homogenisierungskammer (4) zwischen der Trichterwand und der Gaseinspeiseleitung (3), so dass das aus den Öffnungen (33) ausströmende Gas durch die Einblasfläche in den Trichter gelangt.

2. Vorrichtung nach Anspruch 1, **dadurch gekennzeichnet, dass** die Gaseinblasfläche an der Wand des Trichters (1) aus mindestens einer Öffnung (21) besteht.

3. Vorrichtung nach Anspruch 2, **dadurch gekennzeichnet, dass** die Querschnittsfläche A der Homogenisierungskammer (4), die mit der Wand des Trichters (1) in Kontakt steht, und die Querschnittsflächen aᵢ der Gaseinblasöffnungen (21), die in die Wand des Trichters (1) gebohrt sind, der folgenden Beziehung gehorchen: das Verhältnis A/ Σaᵢ ist größer oder gleich 1, vorzugsweise größer oder gleich 1,5; dabei stellt Σaᵢ die Summe der Querschnitte der Öffnungen (21) dar.

4. Vorrichtung nach einem der Ansprüche 2 oder 3, **dadurch gekennzeichnet, dass** die Gaseinblasöffnungen (21), die in die Wand des Trichters (1) gebohrt sind, einen Gasfluss bewirken, der gegen das Unterteil des Trichters (1) gerichtet ist.

5. Vorrichtung nach Anspruch 1, **dadurch gekennzeichnet, dass** die Gaseinblasfläche an der Wand des Trichters (1) aus porösem Material besteht.

6. Vorrichtung nach einem der vorausgehenden Ansprüche, **dadurch gekennzeichnet, dass** das Mittel zum Einblasen von Gas gegenüber dem Durchgangsweg des Polymers in dem Trichter (1) zurückversetzt ist.

7. Vorrichtung nach einem der vorhergehenden Ansprüche, **dadurch gekennzeichnet, dass** der innere Querschnitt S der Gasspeiseleitung (3) und die Querschnitte Sᵢ der Öffnungen der folgenden Beziehung gehorchen: Das Verhältnis S/Σsᵢ ist größer oder gleich 1, vorzugsweise größer oder gleich 1,5; dabei stellt Σsᵢ die Summe der Querschnitte Sᵢ der Öffnungen (33) dar.

8. Verwendung der Vorrichtung nach einem der Ansprüche 1 bis 7 zur Extrusion von Polyethylen oder Polypropylen.

## Claims

1. Device for producing plastic articles by the forming of a polymer, the said device comprising:
- a polymer feed hopper (1),
- means for heating and for moving the melting polymer,
- means for forming the polymer melt, and
- at least one means for injecting gas into the hopper,
**characterized in that** the said gas injection means comprises:
• at least one gas injection surface near the wall of the hopper (1);
• a pipe (3) for feeding gas into the hopper via this gas injection surface:
. one end (31) of which pipe (3) is connected to a gas supply,
. the other end (32) of which pipe, directed towards the injection surface, is closed,
. and which has at least one radial opening o (33) allowing the gas to be ejected at right angles to its direction of flow in the pipe; and
• a homogenization chamber (4) fitted between the wall of the hopper and the gas feed pipe (3) so that the gas ejected from the openings (33) enters the hopper via the injection surface.

2. Device according to Claim 1, **characterized in that** the gas injection surface near the wall of the hopper (1) consists of at least one orifice (21).

3. Device according to Claim 2, **characterized in that** the cross section A of the homogenization chamber (4) in contact with the wall of the hopper (1) and the cross sections aᵢ of the gas injection orifices (21) drilled in the wall of the hopper (1) satisfy the following relationship: the ratio A/Σaᵢ is greater than or equal to 1, preferably greater to or equal to 1.5; Σaᵢ representing the sum of the cross sections of the said orifices (21).

4. Device according to either of Claims 2 and 3, **characterized in that** the said gas injection orifices (21) drilled in the wall of the hopper (1) create a gas flow oriented towards the bottom of the hopper (1).

5. Device according to Claim 1, **characterized in that** the gas injection surface near the wall of the hopper (1) consists of a porous body.

6. Device according to any one of the preceding claims, **characterized in that** the gas injection means is located set back from the path of the polymer in the hopper (1).

7. Device according to any one of the preceding claims, **characterized in that** the internal cross section S of the gas feed pipe (3) and the cross sections sᵢ of the said openings satisfy the following relationship: the ratio S/Σsᵢ is greater than or equal to 1, preferably greater than or equal to 1.5; Σsᵢ representing the sum of the cross sections sᵢ of the said openings (33).

8. Use of the device according to any one of Claims 1 to 7 for the extrusion of polyethylene or polypropylene.
